# EUROPÄISCHE PATENTSCHRIFT

(11) **EP 3 680 922 B1**
(45) Veröffentlichungstag und Bekanntmachung des Hinweises auf die Patenterteilung: **05.01.2022**
(21) Anmeldenummer: 19209924.0
(22) Anmeldetag: 19.11.2019
(51) Int. Cl.: H01F 41/02, B25J 9/16, B25J 15/00, B25J 15/06, B25J 19/02

(54) **VERFAHREN UND POSITIONIERSYSTEM ZUR HERSTELLUNG VON TRANSFORMATORKERNEN**
METHOD AND POSITIONING SYSTEM FOR MANUFACTURING TRANSFORMER CORES
PROCÉDÉ ET SYSTÈME DE POSITIONNEMENT PERMETTANT DE FABRIQUER DES NOYAUX DE TRANSFORMATEUR

(30) Priorität: 03.01.2019 DE 102019100064
(43) Veröffentlichungstag der Anmeldung: 15.07.2020
(73) Patentinhaber: Heinrich Georg GmbH Maschinenfabrik, 57223 Kreuztal (DE)
(72) Erfinder: FRIEDRICH, Jost, 57271 Hilchenbach (DE); LOTH, Volker, 57258 Freudenberg (DE)
(74) Vertreter: advotec.

(56) Entgegenhaltungen:
- WO-A1-2010/107504
- CN-A- 108 666 126
- DE-A1- 3 341 285
- DE-A1- 3 730 132
- US-A- 4 578 860

## Beschreibung

Die Erfindung betrifft ein Verfahren und ein Positioniersystem zur Herstellung Transformatorkernen, wobei Bleche, aus denen ein Transformatorkern ausgebildet wird, mittels eines mehrachsigen Roboters des Positioniersystems auf einem Legetisch abgelegt werden, wobei das Positioniersystem von einer Steuervorrichtung gesteuert wird, wobei der Roboter von einer Steuereinrichtung der Steuervorrichtung gesteuert wird, wobei die Bleche von dem Roboter mit einem Greifarm und einer Greifvorrichtung des Greifarms gehandhabt werden, wobei mittels des Roboters Bleche von einer Übergabeposition aufgenommen und auf den Legetisch zu einem Transformatorkern gestapelt werden, wobei die Bleche mittels einer Positioniervorrichtung des Positioniersystems in jeweiligen Ablagepositionen auf dem Legetisch lagegenau positioniert werden.

Die aus dem Stand der Technik bekannten Anlagen zur Herstellung von Transformatorkernen sind entsprechend einem Prozessablauf so aufgebaut, dass zunächst Transformatorbleche aus Blechstreifen mittels einer Schneidvorrichtung ausgeschnitten werden. Die Blechstreifen sind auf einer Bandstahlrolle bevorratet, welche von einem Haspelkopf einer Haspel gehaltert ist. Die in der Schneidvorrichtung geschnittenen Bleche können unterschiedliche Geometrien aufweisen, da ein Transformatorkern regelmäßig aus Blechen unterschiedlicher Gestalt zusammengesetzt wird. Die Bleche können beispielsweise mit einem Transportband von der Schneidvorrichtung weggeführt und zur Weiterverarbeitung bevorratet bzw. gestapelt werden. Ein Zusammensetzen des Transformatorkerns aus den Blechen erfolgt auf einem sogenannten Legetisch. An dem Legetisch sind Fädelbolzen und/oder Blechanschläge als Positionierhilfe montiert und die Bleche werden an den Fädelbolzen bzw. Blechanschlägen zu dem Transformatorkern zusammengesetzt bzw. gestapelt. Um die Bleche örtlich festlegen zu können, sind zumindest immer zwei Positionierhilfen erforderlich. Die Bleche weisen insbesondere Bohrungen bzw. Ausschnitte auf, in die die Fädelbolzen eingreifen können. Die Bleche werden auf die Fädelbolzen aufgesteckt bzw. entlang von Blechanschlägen gestapelt und so lagegenau relativ zueinander positioniert. Des Weiteren können Fädelbolzen von oben in die Bohrungen eingreifen und so als Positionierhilfe dienen. Das Bilden eines Stapels Bleche auf dem Legetisch kann prinzipiell manuell, aber auch automatisiert erfolgen. Bei einem automatisierten Stapeln, beispielsweise mit einem Roboter, ist stets sicherzustellen, dass die unterschiedlichen Bleche in der richtigen Reihenfolge gestapelt werden, so dass beispielsweise ein annähernd runder Querschnitt des Stapels ausgebildet wird.

Da der Legetisch stets für einen bestimmten Transformatorkern mit einer in Führungen verschiebbaren Position der Positionierhilfen aufgebaut wird, kann ein Legetisch immer nur nach einem Umbau der Positionierhilfen zur Herstellung einer Art eines Transformatorkerns genutzt werden. Wenn mit einer Anlage verschiedenste Arten von Transformatorkernen hergestellt werden sollen, wird eine entsprechend große Anzahl Legetische für Kernformen außerhalb der Verschiebebereiche der Positionierhilfen benötigt, die vorgehalten werden müssen.

Weiter ist nachteilig, dass die in den Blechen mit der Schneidvorrichtung ausgebildeten Bohrungen bzw. Ausschnitte zur Positionierung der Bleche an den Fädelbolzen zwangsläufig in dem Transformatorkern verbleiben. Dadurch wird eine mögliche Masse an Eisen verringert, wodurch Eisenverluste des Transformators und damit ein durch den Transformatorkern bedingter Energieverbrauch des Transformators in unerwünschter Weise erhöht wird. Das Dokument US4578860 A offenbart ein Verfahren zur Herstellung von Transformatorkernen mit einem Positioniersystem, wobei Bleche, aus denen ein Transformatorkern ausgebildet wird, mittels eines mehrachsigen Roboters des Positioniersystems auf einem Legetisch abgelegt werden, wobei das Positioniersystem von einer Steuervorrichtung gesteuert wird, wobei der Roboter von einer Steuereinrichtung der Steuervorrichtung gesteuert wird, wobei die Bleche von dem Roboter mit einem Greifarm und einer Greifvorrichtung des Greifarms gehandhabt werden, wobei mittels des Roboters Bleche von einer Übergabeposition aufgenommen und auf den Legetisch zu einem Transformatorkern gestapelt werden, wobei die Bleche mittels einer Positioniervorrichtung des Positioniersystems in jeweiligen Ablagepositionen auf dem Legetisch lagegenau positioniert werden.

Der vorliegenden Erfindung liegt daher die Aufgabe zugrunde, ein Verfahren sowie ein Positioniersystem zum Herstellen von Transformatorkernen mit einem verbesserten Wirkungsgrad vorzuschlagen.

Diese Aufgabe wird durch ein Verfahren mit den Merkmalen des Anspruchs 1 und ein Positioniersystem mit den Merkmalen des Anspruchs 15 gelöst.

Bei dem erfindungsgemäßen Verfahren zur Herstellung von Transformatorkernen mit einem Positioniersystem werden Bleche, aus denen ein Transformatorkern ausgebildet wird, mittels eines mehrachsigen Roboters des Positioniersystems auf einem Legetisch abgelegt, wobei das Positioniersystem von einer Steuervorrichtung gesteuert wird, wobei der Roboter von einer Steuereinrichtung der Steuervorrichtung gesteuert wird, wobei die Bleche von dem Roboter mit einem Greifarm und einer Greifvorrichtung des Greifarms gehandhabt werden, wobei mittels des Roboters Bleche von einer Übergabeposition aufgenommen und auf den Legetisch zu einem Transformatorkern gestapelt werden, wobei die Bleche mittels einer Positioniervorrichtung des Positioniersystems in jeweiligen Ablagepositionen auf dem Legetisch lagegenau positioniert werden, wobei mit einer Messeinrichtung der Positioniervorrichtung eine Position eines auf dem Legetisch befindlichen ersten Blechs bestimmt wird, wobei mit der Steuervorrichtung eine Ablageposition eines zweiten Blechs in Abhängigkeit von der Position des ersten Blechs bestimmt wird, wobei das zweite Blech mittels des Roboters in der Ablageposition positioniert wird.

Da der Transformatorkern nicht alleine aus einem Blechstapel ausgebildet wird, sondern aus Blechstapeln, die zusammen bei einem fertigen Transformator einen in sich geschlossenen Eisenkern bilden, ist es zunächst unerheblich, ob der Roboter die Bleche stapelt oder die untersten Bleche nebeneinander auf dem Legetisch anordnet.

Bei der Ausbildung des Transformatorkerns wird eine Vielzahl von Blechen, die regelmäßig auch unterschiedlich ausgebildet sind, übereinander und nebeneinander gestapelt, wobei zwischen zwei angrenzenden Stapeln die Bleche der Stapel auch gegenseitig überlappen können. Neben dem ersten und dem zweiten Blech wird daher noch eine Vielzahl weiterer Bleche zur Ausbildung des Transformatorkerns auf dem Legetisch positioniert. Unter dem ersten Blech und dem zweiten Blech können daher auch Bleche verstanden werden, die auf einem bereits vorhandenen Stapel auf dem Legetisch oder auf benachbarte Stapel abgelegt werden. Auf diese Bleche können dann auch weitere Bleche gestapelt bzw. abgelegt werden. Das erste Blech und das zweite Blech können gleich oder unterschiedlich groß bzw. mit einer voneinander verschiedenen Gestalt ausgebildet sein. Dabei kann das erste Blech größer oder kleiner als das zweite Blech sein, so dass sich die Bleche zumindest abschnittsweise einander überlappen.

Wesentlich ist, dass das zweite Blech in Abhängigkeit der Position des ersten Blechs auf dem Legetisch positioniert wird. Insbesondere dadurch, dass mit der Messeinrichtung die Position des auf dem Stapel bzw. Legetisch befindlichen ersten Blechs bestimmt wird, wird es möglich, die Ablageposition, das heißt eine Soll-Position des zweiten Blechs relativ zu dem ersten Blech in Abhängigkeit von der Ist-Position des ersten Blechs zu bestimmen bzw. mit der Steuervorrichtung zu berechnen, wobei dann mit der Steuereinrichtung der Roboter derart gesteuert wird, dass das zweite Blech in der so vorbestimmten Ablageposition relativ zu dem ersten Blech positioniert wird. Wesentlich ist hier, dass die Messeinrichtung die Position des ersten Blechs auf dem Stapel bzw. dem Legetisch misst, um das zweite Blech möglichst genau an dem ersten Blech positionieren zu können. Dadurch ist es dann möglich, vollständig auf Fädelbolzen und/oder Anschläge zu verzichten, wodurch eine Masse eines Eisenkerns bzw. Transformatorkerns erhöht und damit ein Wirkungsgrad des Transformators wesentlich verbessert werden kann. Auch ist es dann nicht mehr erforderlich, einen Legetisch speziell mit Positionierhilfen bzw. Fädelbolzen und/oder Anschlägen zum Aufbau eines Transformatorkerns aufzubauen. Es können so prinzipiell auch Legetische ohne jegliche Positionierhilfen verwendet werden, wodurch Rüstzeiten entfallen und Lagerhaltungskosten erheblich gemindert werden können.

Vorteilhaft ist es, wenn die Steuervorrichtung die Ablageposition des zweiten Blechs in Abhängigkeit der Position des ersten Blechs anpasst. Mittels der Steuervorrichtung kann dann eine Korrektur der Ablageposition des zweiten Blechs relativ zu der Position des ersten Blechs erfolgen. So kann eine Lagegenauigkeit des zweiten Blechs relativ zu dem ersten Blech auch ohne zusätzliche mechanische Positionierhilfen sichergestellt werden. Dadurch ist es dann auch möglich, eventuelle Ungenauigkeiten, die eine Position des ersten Blechs beeinflussen können, wie beispielsweise eine Abnutzung des Legetischs zu berücksichtigen. Weiter kann der Legetisch vollkommen flexibel genutzt werden, und es wird möglich, eine Anzahl verschiedener Transformatorkerne mit ein und demselben Legetisch herzustellen. Darüber hinaus kann dann auch der Legetisch zum Aufbau mehrerer Transformatorkerne gleichzeitig genutzt werden.

Mittels der Messeinrichtung kann eine Kante einer Kontur des auf dem Legetisch befindlichen ersten Blechs relativ zu einem Referenzpunkt der Positioniervorrichtung in einem Koordinatensystem der Messeinrichtung bestimmt werden. Der Referenzpunkt kann dabei insbesondere ein gedachter Referenzpunkt bzw. ein in der Steuervorrichtung gespeicherter oder durch die Steuervorrichtung festgelegter Referenzpunkt sein. Gleichwohl kann der Referenzpunkt auch durch eine tatsächlich physisch vorhandene Referenzmarke ausgebildet werden. Die Lage des Referenzpunktes relativ zu zumindest der Kante des ersten Blechs kann durch das Koordinatensystem der Messeinrichtung bestimmt werden. Bei dem Koordinatensystem kann es sich um ein kartesisches Koordinatensystem handeln. Insgesamt kann so die Position des ersten Blechs auf dem Legetisch innerhalb des Koordinatensystem der Messeinrichtung definiert und in der Steuervorrichtung abgespeichert werden. Die Positionierung des zweiten Blechs bzw. dessen Ablageposition kann dann ebenfalls anhand des Koordinatensystems der Messeinrichtung definiert werden. So ist es möglich, die Position des ersten Blechs und die Ablageposition bzw. Soll-Position des zweiten Blechs über das Koordinatensystem genau festzulegen.

Alternativ oder ergänzend können mittels der Messeinrichtung jeweils zumindest zwei, vorzugsweise drei Referenzmarken der Positioniervorrichtung an dem Legetisch, dem Roboter, der Greifvorrichtung, der Bleche und/oder eines umgebenden Raums und deren Position in einem Koordinatensystem der Messeinrichtung erfasst werden. Das Koordinatensystem kann ein kartesisches Koordinatensystem sein, so dass zumindest eine zweidimensionale, vorzugsweise eine dreidimensionale Definition der jeweiligen Position der Referenzmarken in dem Koordinatensystem möglich ist. Wenn der Legetisch, der Roboter, die Greifvorrichtung, die Bleche und/oder der umgebende Raum jeweils Referenzmarken aufweisen, ist es möglich, eine Lage des Legetisches, des Roboters, der Greifvorrichtung, der Bleche und/oder des umgebenden Raums relativ zueinander bzw. in dem Koordinatensystem genau zu bestimmen. Wenn beispielsweise ein Legetisch zum Aufbau eines Transformatorkerns an den Roboter verbracht wird, kann dann eine Relativposition von Roboter und Legetisch genau bestimmt werden. Auch können eventuelle Verschiebungen eines Stapels eines Transformatorkerns aus Blechen leicht festgestellt und korrigiert werden. Wenn auch der umgebende Raum in die Positionsbestimmung mit einbezogen wird, können beispielsweise die jeweiligen Positionen des Legetischs und des Roboters relativ zu einander über den Raum bzw. deren jeweilige Relativposition in dem Raum definiert werden. Dies ist besonders vorteilhaft, da der Raum naturgemäß ortsfest und nicht im Gegensatz zu einem Roboter und einem Legetisch verschiebbar ist.

Auch kann vorgesehen sein, mehrere Legetische zu verwenden, die beispielsweise an den Roboter verbracht werden können bzw. um den Roboter herum angeordnet werden können. Wenn der Roboter dann von mehreren Übergabepositionen Bleche übernehmen kann, kann der Roboter stets auf Übergabepositionen zugreifen, an denen sich noch Bleche bzw. Blechstapel befinden. So besteht auch nicht die Gefahr, dass durch leere Übergabepositionen Stillstandszeiten des Roboters anfallen. Der Roboter kann in diesem Fall Bleche von noch vollen Übergabepositionen entnehmen und auf verschiedenen Legetischen stapeln. Für den Fall, dass auf einem Legetisch Bleche, die sich sonst auf einer leeren Übergabeposition befinden, gestapelt werden müssen, kann der Roboter auch noch weitere Bleche von der noch vollen Übergabeposition auf den weiteren Legetischen stapeln. Eine geeignete Zuordnung von in den jeweiligen Übergabepositionen vorhandenen Blechen zu Legetischen kann über die Steuervorrichtung gesteuert werden. Die Übergabepositionen können von einer Fördervorrichtung einer Anlage zur Herstellung von Transformatorkernen aufgefüllt werden.

Die Referenzmarken können jeweils ein Teilkoordinatensystem des Legetischs, des Roboters, der Greifvorrichtung, der Bleche und/oder des umgebenden Raums ausbilden, wobei die Steuervorrichtung mittels Koordinatentransformation die jeweiligen Positionen der Referenzmarken in den Teilkoordinatensystemen in das Koordinatensystem überführen kann. Der Legetisch, der Roboter, die Greifvorrichtung, die jeweiligen Bleche und/oder der umgebende Raum kann demnach ein jeweils eigenes Teilkoordinatensystem aufweisen bzw. es kann eine Zuweisung des Teilkoordinatensystems auf Basis der jeweiligen Referenzmarken in der Steuervorrichtung erfolgt sein. Jedes Teilkoordinatensystem kann durch die jeweiligen Referenzmarken definiert werden, so dass die jeweiligen Teilkoordinatensysteme relativ zueinander unterschiedlich positioniert sein können, beispielsweise wenn der Legetisch vor dem Roboter aufgestellt wird. Die Teilkoordinatensysteme können dann mittels der Koordinatentransformation in das Koordinatensystem der Messeinrichtung überführt und so relativ zueinander in Bezug gesetzt werden. So kann eine Relativposition aller Referenzmarken in dem Koordinatensystem einfach bestimmt werden.

Die Referenzmarken können an dem Legetisch, dem Roboter, der Greifvorrichtung, der Bleche und/oder dem umgebenden Raum angeordnet sein, wobei die Erfassung der Referenzmarken mit mechanischen, optischen, magnetischen und/oder elektromagnetischen Mitteln der Messeinrichtung erfolgen kann. Folglich können die Referenzmarken körperlich ausgebildet sein, beispielsweise in Form einer zweidimensionalen oder dreidimensionalen Gestalt. Die Referenzmarken können so ausgebildet sein, dass sie kontaktfrei von den Mitteln der Messeinrichtung detektiert werden können. Die Mittel können beispielsweise Sensormittel bzw. Sensoren, wie eine Kamera, ein Laser, ein Magnetsensor, ein Ultraschallsensor oder ein anderer optischer Sensor sein. Folglich können die Referenzmarken durch ein entsprechend detektierbares Abbild, einen Magneten, ein optisches Element oder eine dreidimensionale Gestalt ausgebildet sein. Die Referenzmarke kann eine passive Referenzmarke sein oder auch eine aktive Referenzmarke, das heißt eine Referenzmarke, die ein Signal sendet. Durch eine derartige Ausbildung der Referenzmarken wird eine Detektion derselben sicher möglich.

Die Steuervorrichtung kann die Referenzmarken verarbeiten und Relativabstände der Referenzmarken bestimmen, wobei die Steuervorrichtung die Ablageposition anhand der Relativabstände bestimmen kann. Die Bestimmung der Relativabstände der Referenzmarken kann mittels Triangulation oder auch Koordinatentransformation erfolgen. Aus den Relativabständen kann die Steuervorrichtung die jeweiligen Relativpositionen von Legetisch, Roboter, Greifvorrichtung, der Bleche und/oder dem umgebenden Raum berechnen und so die Ablageposition für das zweite Blech relativ zu dem ersten Blech genau ermitteln.

Die Steuervorrichtung kann demnach eine Ist-Position des zweiten Blechs bestimmten und mit der Ablageposition vergleichen. Die Ist-Position des zweiten Blechs kann von der Steuervorrichtung in einem Koordinatensystem definiert werden. Der Vergleich mit der Ablageposition des zweiten Blechs kann kontinuierlich oder auch sequenziell getaktet erfolgen. So kann die Position des zweiten Blechs im umgebenden Raum über dem Legetisch oder über mehreren Legetischen stets genau bestimmt werden. Durch den kontinuierlichen oder getakteten Vergleich der Ist-Position mit der Ablageposition können auch eventuelle Lagefehler bei der Zuführung des zweiten Blechs mit dem Roboter bzw. dem Greifarm und der Greifvorrichtung leicht korrigiert werden, wodurch eine erhöhte Genauigkeit der Zuführbewegung des Roboters erzielt werden kann.

Weiter kann bei einer Bewegung des zweiten Blechs zu der Ablageposition durch den Roboter die Steuervorrichtung eine Relativgeschwindigkeit des zweiten Blechs bestimmen und bei der Berechnung der Ist-Position des zweiten Blechs berücksichtigen. Dies kann beispielsweise dadurch erfolgen, dass mittels der Messeinrichtung die Bewegung des zweiten Blechs mit dem Roboter bzw. dem Roboterarm zur Ablageposition hin erfasst und die Relativgeschwindigkeit des zweiten Blechs bestimmt wird. Die Erfassung der Lage kann durch beispielsweise drei Sensoren erfolgen, wobei die Erfassung der Relativgeschwindigkeit durch einen vierten oder weitere Sensoren erfolgen kann. So kann eine Berechnung der Position des zweiten Blechs im umgebenden Raum über den Legetisch durch die Berücksichtigung der Relativgeschwindigkeit in im Wesentlichen Echtzeit durchgeführt werden. Eine Genauigkeit einer Ablage des zweiten Blechs in der Ablageposition wird dadurch noch weiter erhöht und eine Handhabungsgeschwindigkeit des Roboters kann weiter gesteigert werden.

Bei einer Bewegung des zweiten Blechs zu der Ablageposition durch den Roboter kann die Steuervorrichtung eine Bewegungsbahn des zweiten Blechs anhand der Ist-Position des zweiten Blechs kontinuierlich oder in regelmäßigen Schritten korrigieren. So wird eine raumabhängige Positionierung des Greifarms mit der Greifvorrichtung und dem daran gehalterten zweiten Blech mit einer Bahnkorrektur des Greifarms in Bezug zur Ablageposition hin möglich. Die Erfassung der Bewegung kann beispielsweise durch im umgebenden Raum angeordnete Sensoren zur Lageerkennung des zweiten Blechs erfolgen. Die Sensoren können beispielsweise jeweils durch eine Kamera, einen Infrarotsensor, einen Ultraschallsensor oder einen Laser ausgebildet sein. Dabei können drei Sensoren eine Lage- bzw. Ist-Position des zweiten Blechs in einem Koordinatensystem bestimmen und ein vierter Sensor eine Relativgeschwindigkeit des zweiten Blechs. Dadurch wird es dann möglich, eine Bahnkorrektur bzw. eine Korrektur der Ist-Position des zweiten Blechs in Echtzeit zu der Steuervorrichtung durchzuführen, so dass die Ablageposition noch genauer erreicht werden kann.

Die Messeinrichtung kann vor einem Aufnehmen des zweiten Blechs von der Übergabeposition eine Kontur des zweiten Blechs erfassen und das Blech vermessen, wobei die Steuervorrichtung ein Messergebnis der Messung bei der Berechnung bzw. Bestimmung der Ablageposition des zweiten Blechs berücksichtigen kann. Die Vermessung des zweiten Blechs kann beispielsweise ebenfalls durch einen Sensor erfolgen, mit dem dann die Kontur des zweiten Blechs erkannt und von der Messeinrichtung vermessen werden kann. Eventuelle Maßabweichungen des zweiten Blechs können dann auch bei dem Ablegen des zweiten Blechs bereits berücksichtigt werden. Die Ablageposition kann dann hinsichtlich eventueller Maßabweichungen des zweiten Blechs korrigiert werden. Auch kann vorgesehen sein, dass in der Ablageposition verschieden große Bleche abgelegt werden, wobei dann die Steuervorrichtung anhand des Messergebnisses erkennen kann, um welches Blech es sich handelt bzw. auf welchem Blechstapel des Transformatorkerns das betreffende Blech abzulegen ist.

Die Messeinrichtung kann nach einem Ablegen und Abgeben des zweiten Blechs einen Spalt bzw. einen Kantenabstand einer Kante des zweiten Blechs und einer Kante des ersten Blechs vermessen, wobei die Steuervorrichtung ein Messergebnis der Messung bei der Berechnung einer Ablageposition eines weiteren Blechs berücksichtigen kann. Das Vermessen der Ablageposition des zweiten Blechs bzw. des Kantenabstands kann mit einem an der Greifvorrichtung angeordneten Sensor erfolgen. Mit dem Sensor kann dann ein Kantenabstand von nebeneinander auf dem Legetisch abgelegten Blechen und/oder ein Kantenabstand von übereinander gestapelten Blechen gemessen werden. Auch kann ein Winkel bzw. die Ausrichtung von Blechstapeln des Transformatorkerns relativ zueinander dadurch vermessen werden, dass eine Raumlage von Kanten gemessen wird. Sofern die Ablageposition des ersten und zweiten Blechs auf dem Legetisch von einer Soll-Position abweicht, kann die Ablageposition des weiteren Blechs um diesen Fehler korrigiert werden. Durch diese Ausgleichskorrektur können sich fortsetzende Fehler bei der Ablage von Blechen sicher vermieden werden.

Die Messvorrichtung kann eine Höhe der Ablageposition vermessen, wobei die Steuervorrichtung ein Messergebnis der Messung mit Bauteildaten eines Transformatorkerns vergleichen und beim Stapeln weiterer Bleche berücksichtigen kann. Die Vermessung der Höhe der Ablagepositionen kann ebenfalls mittels eines Sensors an der Greifvorrichtung erfolgen. Durch eine geringfügig variierende Blechdicke kann es zu einer Abweichung einer Ist-Höhe eines Blechstapels zu einer Soll-Höhe des Blechstapels kommen. Die Steuervorrichtung kann die gemessene Ist-Höhe mit den Bauteildaten des Transformatorkerns vergleichen und eine derartige Abweichung feststellen. Liegt eine Abweichung außerhalb festgelegter Toleranzen vor, kann vorgesehen sein, dass dem Blechstapel zusätzliche oder weniger Bleche als nach den Bauteildaten vorgesehen, hinzugefügt werden. So wird auch ein Ausgleich einer möglichen Höhendifferenz zwischen benachbarten Blechstapeln möglich.

Vorteilhaft ist es, wenn von einem Steuersystem einer Anlage zur Herstellung von Transformatorkernen in Abhängigkeit von einem Transformatorkern beschreibenden Bauteildaten Steuerbefehle an die Steuervorrichtung übermittelt werden. Die Anlage zur Herstellung von Transformatorkernen kann eine Schneidvorrichtung für Blechstreifen, Haspeln zur Zuführung von Blechstreifen zu der Schneidvorrichtung, eine Fördervorrichtung zum Transport geschnittener Blechstreifen und eine Mehrzahl von Legetischen umfassen. Weiter kann vorgesehen sein, dass das Steuersystem die gesamte Anlage zur Herstellung von Transformatorkernen steuert. Die im Steuersystem vorhandenen Bauteildaten eines Transformatorkerns können in Steuerbefehle umgewandelt werden, die an die Steuervorrichtung bzw. die Steuereinrichtung übermittelt werden. Beispielsweise kann das Steuersystem bereits eine Position von Transformatorkernen auf einer Positionierfläche eines Legetischs bestimmen bzw. berechnen und der Steuervorrichtung Steuerbefehle zur Bestückung eines Legetisches mit Blechstapeln an den berechneten Positionen übermitteln. Das Steuersystem kann wie die Steuervorrichtung ebenfalls Mittel zur Datenverarbeitung, wie einen Computer mit einer Software, umfassen. Weiter kann das Steuersystem beispielsweise einen Kernkonfigurator für Transformatorkerne umfassen.

Das erfindungsgemäße Positioniersystem zur Herstellung von Transformatorkernen umfasst einen mehrachsigen Roboter, zumindest einen Legetisch zur Aufnahme von Blechen, aus denen ein Transformatorkern ausbildbar ist, und eine Steuervorrichtung zur Steuerung des Positioniersystems, wobei die Steuervorrichtung eine Steuereinrichtung zur Steuerung des Roboters aufweist, wobei der Roboter einen Greifarm mit einer Greifvorrichtung zur Handhabung von Blechen aufweist, wobei mittels des Roboters Bleche von einer Übergabeposition aufnehmbar und auf einen Legetisch zu einem Transformatorkern stapelbar sind, wobei das Positioniersystem eine Positioniervorrichtung zur lagegenauen Positionierung der Bleche an jeweiligen Ablagepositionen auf dem Legetisch aufweist, wobei die Positioniervorrichtung eine Messeinrichtung aufweist, mit der eine Position eines auf dem Legetisch befindlichen ersten Blechs bestimmbar ist, wobei mit der Steuervorrichtung eine Ablageposition eines zweiten Blechs in Abhängigkeit der Position des ersten Blechs bestimmbar ist, wobei das zweite Blech mittels des Roboters in der Ablageposition positionierbar ist.

Zu den Vorteilen des erfindungsgemäßen Positioniersystems wird auf die Vorteilsbeschreibung des erfindungsgemäßen Verfahrens zur Herstellung von Transformatorkernen mit einem Positioniersystem verwiesen.

Die Messeinrichtung kann zumindest einen an der Greifvorrichtung angeordneten bildgebenden Sensor umfassen, wobei mit dem Sensor zumindest eine Kante einer Kontur des auf dem Legetisch befindlichen ersten Blechs erfasst werden kann, und von der Messeinrichtung eine Lage der Kante in einem Koordinatensystem der Messeinrichtung bestimmt werden kann. Der Sensor kann beispielsweise eine Kamera, ein Infrarotsensor, ein Ultraschallsensor, ein Laser oder eine andere Art eines berührungslosen Sensors sein. Auch kann die Messeinrichtung mehrere Sensoren, die an der Greifvorrichtung angeordnet sein können, umfassen. Dadurch, dass der Sensor der Messeinrichtung zumindest eine Kante oder die gesamte Kontur des ersten Blechs erfassen kann, kann auch eine Lage bzw. die Position des ersten Blechs in dem kartesischen Koordinatensystem von der Steuervorrichtung bestimmt bzw. berechnet werden. Gleichwohl ist der Sensor auch dafür nutzbar, eine Kante bzw. Kontur des auf der Übergabeposition befindlichen zweiten Blechs zu bestimmen und so das zweite Blech vor einer Aufnahme mit der Greifvorrichtung zu vermessen.

Weiter kann die Messeinrichtung zumindest einen Positionssensor umfassen, wobei mit dem Positionssensor Referenzmarken der Positioniervorrichtung an dem Legetisch, dem Roboter, der Greifvorrichtung, der Bleche und/oder eines umgebenden Raums und deren Position in einem Koordinatensystem der Messeinrichtung erfasst werden können. Die Positionssensoren können ortsfest, beispielsweise innerhalb des umgebenden Raums angeordnet sein und jeweils eine Kamera, ein Infrarotsensor, ein Laser, ein Ultraschallsensor, ein induktiver Sensor oder eine andere Art eines berührungslosen Sensors sein. Die Referenzmarken der Positioniervorrichtung können dann so ausgebildet sein, dass sie mit dem jeweiligen Sensor sicher erfassbar sind. Beispielsweise eine mit der Kamera erfassbare Bilddarstellung oder eine mit Ultraschall erfassbare Gestalt als Referenzmarke. Die jeweilige Position der Referenzmarke in dem kartesischen Koordinatensystem ist dann einfach, genau und kontinuierlich mit der Messeinrichtung bestimmbar. Die Position kann wiederum für eine Lagekorrektur genutzt werden.

Der Legetisch kann frei von Fädelbolzen oder Anschlägen für die Bleche sein. Beispielsweise kann eine Positionierfläche des Legetischs, auf der die Bleche abgelegt werden, vollständig eben sein. Wenn keine Fädelbolzen oder Anschläge für die Bleche verwendet werden, entfallen kostenaufwendige Rüstzeiten und die Legetische sind universell für jede Art von Transformatorkern verwendbar. Auch ist es dann nicht mehr erforderlich Bohrungen für Fädelbolzen in den Blechen vorzusehen. Gleichwohl ist es prinzipiell möglich, dennoch Fädelbolzen oder Anschläge an den Legetisch zu montieren, wenn dies sachdienlich erscheint.

Das Positioniersystem kann eine Fördervorrichtung zur Zuführung von Blechen umfassen, wobei die Fördervorrichtung benachbart dem Roboter zumindest die Übergabeposition für Bleche aufweist, wobei der Übergabeposition Bleche zuführbar und an der Übergabeposition stapelbar sind. Die Fördervorrichtung kann auch eine Mehrzahl von Übergabepositionen für Bleche aufweisen, wobei in den jeweiligen Übergabepositionen dann unterschiedlich große Bleche von der Fördervorrichtung zur Übergabe an den Roboter abgelegt werden können. Weiter kann der Roboter so angeordnet sein, dass der Roboter mit dem Greifarm und der Greifvorrichtung sämtliche Übergabepositionen erreichen kann. Gleichzeitig können an dem Roboter eine Mehrzahl von Legetischen angeordnet werden, beispielsweise um den Roboter herum, so dass der Roboter Bleche von den Übergabepositionen auf unterschiedlichen Legetischen ablegen kann, je nach dem welche Bleche die Fördervorrichtung an den Übergabepositionen zur Verfügung stellt. Beispielsweise kann der Roboter zwischen zwei parallelen Reihen aus jeweils zumindest zwei oder mehr Legetischen angeordnet und in Richtung der Reihen längsbeweglich verfahrbar sein. Je nach Anzahl der Legetische kann auch eine Mehrzahl von Robotern vorgesehen sein. Wenn die Steuervorrichtung eine Legereihenfolge der Bleche auf den Legetischen in Abhängigkeit einer Verfügbarkeit der Bleche an den Übergabepositionen anpasst, können vorteilhaft Stillstandszeiten des Roboters oder der Fördervorrichtung vermieden werden.

Der Legetisch kann auch selbstfahrend oder ortsfest ausgebildet sein. Beispielsweise kann der Legetisch mittels eines selbstfahrenden Wagens transportierbar sein. So kann der Legetisch mittels der Steuervorrichtung nach Vorgabe eines Kernkonfigurators gesteuert werden und die vorgegebenen Positionen im Produktionsablauf anfahren.

Die Greifvorrichtung kann eine Klemmeinrichtung, eine Saugeinrichtung und/oder eine Magneteinrichtung zur Aufnahme zumindest des zweiten Blechs mit der Greifvorrichtung aufweisen, wobei die Greifvorrichtung eine Fixiereinrichtung zur Fixierung des zweiten Blechs auf dem ersten Blech nach der Positionierung aufweisen kann. Prinzipiell kann die Greifvorrichtung so ausgebildet sein, dass alle Arten von Transformatorblechen aufgenommen und auf den Legetisch bzw. einen Blechstapel abgelegt werden können. Die Aufnahme des Blechs erfolgt dabei vorzugsweise an der Übergabeposition, an der sich bereits ein Blechstapel befinden kann. Das Blech kann von einer Klemmeinrichtung, durch beispielsweise mechanischen Greifer erfasst werden. Weiter kann eine Saugeinrichtung vorgesehen sein, die zumindest eine Saugglocke bzw. einen Sauger aufweisen kann, mit der das betreffende Blech dann mittels Vakuum angesaugt und so gehaltert werden kann. Da die Bleche aus Eisen bestehen, kann auch eine Magneteinrichtung, die beispielsweise von zumindest einem Elektromagneten gebildet ist, zur Aufnahme und Fixierung der Bleche vorgesehen sein. Auch können sämtliche, vorstehend genannte Einrichtungen miteinander kombiniert sein. Wesentlich ist, dass die Greifvorrichtung mit der Fixiereinrichtung eine Fixierung des zweiten Blechs auf dem ersten Blech nach der Positionierung ermöglicht. Da sich beim Ablegen des zweiten Blechs auf dem ersten Blech durch beispielsweise ein zwischen den Blechen befindliches Luftpolster noch eine Lageänderung des zweiten Blechs durch Weggleiten auf dem Luftpolster ergeben könnte, muss sichergestellt werden, dass das zweite Blech sicher und fest an dem ersten Blech anliegt, was mit der Fixiereinrichtung erzielt werden kann.

Die Fixiereinrichtung kann einen Niederhalter aufweisen, wobei mit dem Niederhalter das zweite Blech an das erste Blech angedrückt werden kann, während eine Abgabe des zweiten Blechs erfolgt. Nachdem das zweite Blech sicher auf dem ersten Blech abgelegt wurde, kann mit dem Niederhalter das zweite Blech an das erste Blech angedrückt werden, so dass ein Weggleiten des zweiten Blechs auf einem Luftpolster verhindert werden kann. Der Niederhalter kann beispielsweise aus ein oder mehreren Aktuatoren gebildet sein, die an der Greifvorrichtung angeordnet sind. Erst nachdem das zweite Blech an das erste Blech angedrückt werden kann, kann dann die Abgabe des zweiten Blechs durch die Klemmeinrichtung, Saugeinrichtung und/oder Magneteinrichtung erfolgen. So ist dann immer sichergestellt, dass das Blech erst von der Greifvorrichtung abgegeben bzw. gelöst wird, wenn es sich in der tatsächlich vorgesehen Ablageposition befindet.

Alternativ oder ergänzend kann die Fixiereinrichtung ein Dosiersystem für Klebermaterial aufweisen, wobei mit dem Dosiersystem zumindest ein Klebermaterialtropfen an eine jeweilige Kante, Fläche oder Teilkontur einer Kontur des ersten Blechs und des darauf befindlichen zweiten Blechs appliziert werden kann, bevor eine Abgabe des Blechs bzw. Lösen von der Greifvorrichtung erfolgt. Wesentlich ist, dass mit dem Dosiersystem kein Klebermaterial auf eine horizontale Oberfläche eines Blechs abgegeben wird, da dann dieses Klebermaterial einen unerwünschten Spalt zwischen den Blechen ausbilden kann. Weiter kann vorgesehen sein, dass das Klebermaterial innerhalb weniger Sekunden nach der Applikation an der Kante bereits aushärtet. Das Klebermaterial kann sich dann mit an den jeweiligen Kanten darunter befindlicher Bleche befindlichen Klebermaterials so verbinden, dass eine Klebermaterialraupe ausgebildet wird, die in vertikaler Richtung entlang des Blechstapels verläuft. Eine derartige Klebermaterialraupe kann auch wieder leicht entfernt werden. Der Klebermaterialtropfen kann mittels einer Düse und mit Druckluft an die Kante appliziert werden, wobei die Düse die Kante dann nicht berührt. Beispielsweise kann insbesondere ein Heißklebermaterial vorteilhaft verwendet werden. An der Greifvorrichtung können mehrere Dosiersysteme angeordnet sein, so dass zumindest zwei Klebermaterialraupen entlang dem Blechstapel ausgebildet werden können. Die Klebermaterialraupen können dann eine Lage der Bleche relativ zueinander auf dem Blechstapel fixieren und so eine unerwünschte Relativverschiebung von Blechen verhindern.

Weiter kann das Positioniersystem zumindest eine Stützvorrichtung zum Abstützen von auf dem Legetisch gestapelten Blechen umfassen, wobei die Stützvorrichtung auf dem Legetisch angeordnet werden kann. Prinzipiell ist es auch möglich, dass die Stützvorrichtung an dem Legetisch integriert ist. Mit der Stützvorrichtung kann ebenfalls eine unerwünschte Bewegung eines größeren Blechstapels auf dem Legetisch verhindert werden. Die Stützvorrichtung kann dann beispielsweise ein Umkippen eines Blechstapelns verhindern, wenn diese einen im Wesentlichen runden Querschnitt aufweist. Die Stützvorrichtung ist dann nicht in Art eines Anschlags ausgebildet, sondern liegt an einer Unterseite von Blechen an. Auch kann es bereits ausreichend sein, beiderseits eines Blechstapels eine Stützvorrichtung anzuordnen, die den Blechstapel nur partiell abstützt.

Weitere vorteilhafte Ausführungsformen eines Positioniersystems ergeben sich aus dem Merkmalsbeschreibungen der auf den Anspruch 1 rückbezogenen Unteransprüche.

Nachfolgend wird eine Ausführungsform der Erfindung unter Bezugnahme auf die beigefügten Zeichnungen näher erläutert.

Es zeigen:
- **Fig. 1**: ein Blech zur Ausbildung eines Transformatorkerns nach dem Stand der Technik;
- **Fig. 2**: ein Blech zur Ausbildung eines Transformatorkerns;
- **Fig. 3**: ein Legetisch mit Transformatorkernen in einer Draufsicht;
- **Fig. 4**: eine Greifvorrichtung zusammen mit dem Legetisch in einer Draufsicht;
- **Fig. 5**: die Greifvorrichtung aus **Fig. 4** in einer Draufsicht;
- **Fig. 6**: der Legetisch mit einem Roboter in einer Draufsicht;
- **Fig. 7**: eine Schnittansicht eines Transformatorkerns auf dem Legetisch mit der Greifvorrichtung;
- **Fig. 8**: der Transformatorkern aus **Fig. 4** in einer Draufsicht;
- **Fig. 9**: eine Schnittansicht eines Transformatorkerns mit einer Stützvorrichtung.

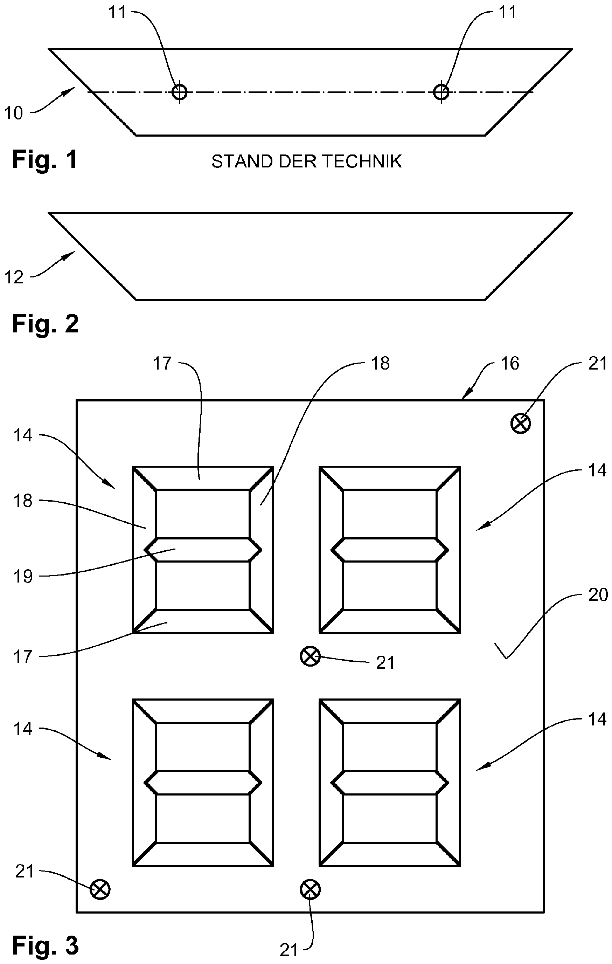

Die **Fig. 1** zeigt ein Blech 10 zur Herstellung von Transformatorkernen nach dem Stand der Technik. Das Blech 10 wurde in einer Schneidvorrichtung aus einem Blechstreifen geschnitten, wobei insbesondere in dem Blech 10 zwei Bohrungen 11 ausgebildet sind, mittels derer das Blech 10 auf hier nicht dargestellte Fädelbolzen auf einem Legetisch aufgesteckt und zu einem Blechstapel des Transformatorkerns mit weiteren Blechen gestapelt werden kann.

Die **Fig. 2** zeigt ein Blech 12, welches sich von dem Blech aus der **Fig. 1** dadurch unterscheidet, dass in dem Blech 12 keinerlei Bohrungen oder sonstige Ausnehmungen ausgebildet sind. Das Blech 12 dient ebenfalls zur Herstellung eines Transformatorkerns, kann jedoch nicht auf Fädelbolzen aufgesteckt werden.

Eine Zusammenschau der **Fig. 3** bis **6** zeigt ein Positioniersystem 13 zur Herstellung von Transformatorkernen 14 mit einem mehrachsigen Roboter 15, einem Legetisch 16 zur Aufnahme von Blechen 17, 18 und 19 , die den Transformatorkern 14 ausbilden, sowie eine hier nicht näher dargestellte Steuervorrichtung zur Steuerung des Positioniersystems 13.

Die **Fig. 3** zeigt den Legetisch 16 mit vier darauf angeordneten, teilweise bereits ausgebildeten Transformatorkernen 14. Die Transformatorkerne 14 sind jeweils aus den Blechen 17, 18 und 19 zusammengesetzt, die ihrerseits gestapelt sind. Die Bleche 17, 18 und 19 liegen auf einer Positionierfläche 20 des Legetischs 16, die eben ausgebildet ist und eine freie Positionierung und ortsunabhängige Anordnung der Transformatorkerne 14 ermöglicht. Auf der Positionierfläche 20 sind weiter Referenzmarken 21 ausgebildet.

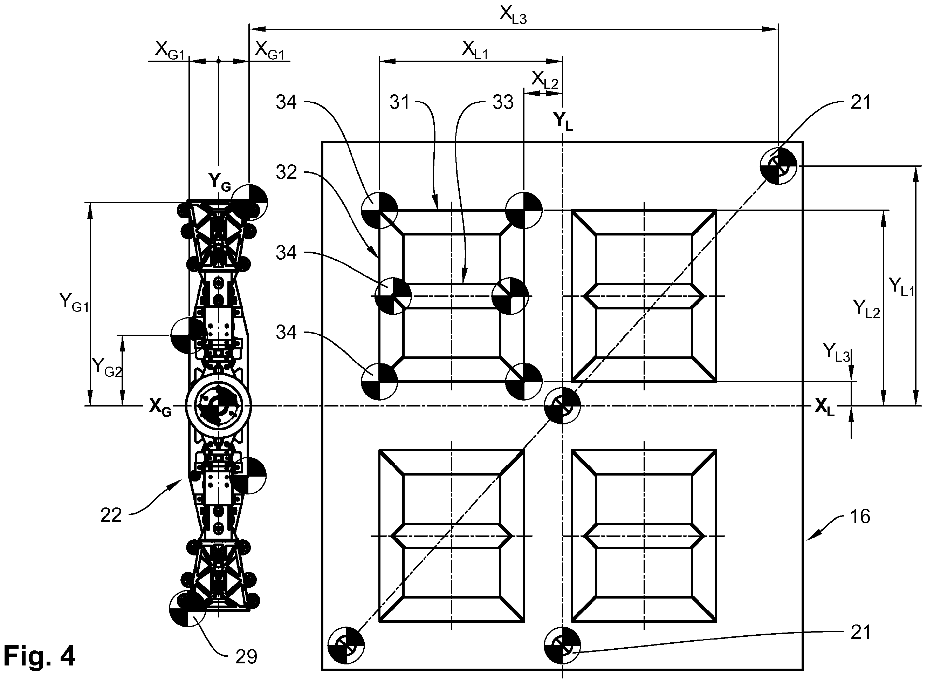

Die **Fig. 4** zeigt den Legetisch 16 zusammen mit einer Greifvorrichtung 22 eines Greifarms 23 des Roboters 15.

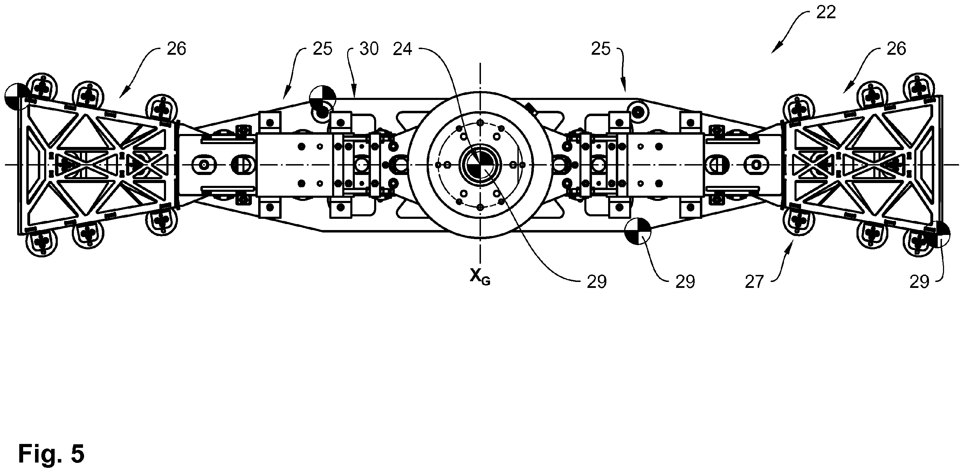

Nach der **Fig. 5** ist die Greifvorrichtung 22 im Wesentlichen symmetrisch ausgebildet und um eine Achse 24 an dem Greifarm 23 drehbar. Die Greifvorrichtung 22 weist ihrerseits zwei Arme 25 auf, an deren jeweiligen Enden 26 eine Saugeinrichtung 27 ausgebildet ist. Die Saugeinrichtung 27 ist aus einer Mehrzahl von Saugglocken 28 gebildet, mit deren Hilfe die Bleche 17, 18 und 19 durch Ansaugen aufgenommen und dann mit dem Roboter 15 gehandhabt werden können. Eine Abgabe der Bleche 17, 18 und 19 ist durch Auflösen eines Vakuums an den Saugglocken 28 leicht möglich. Mit der Greifvorrichtung 22 können so auch mehrere Bleche 17, 18 bzw. 19 gleichzeitig gehandhabt werden. An der Greifvorrichtung 22 sind ebenfalls Referenzmarken 29 ausgebildet. Die Referenzmarken 29 werden durch die Gestalt der Greifvorrichtung 22 selbst bzw. durch deren Kontur 30 ausgebildet. Auch die Bleche 17, 18 und 19 bilden mit ihrer jeweiligen Kontur 31, 32 bzw. 33 Referenzmarken 34 aus.

Die Referenzmarken 21 des Legetischs 16 definieren eine Position des Legetischs 16 in einem kartesischen Koordinatensystem und die Referenzmarken 29 der Greifvorrichtung 22 eine Position der Greifvorrichtung 22 in einem weiteren kartesischen Koordinatensystem. Insgesamt ist es so möglich, einen Relativbezug des Koordinatensystems des Legetischs 16 und des Koordinatensystems der Greifvorrichtung 22 herzustellen. Weiter kann über die Referenzmarken 34 des Transformatorkerns 14 eine Lage des Transformatorkerns 14 auf dem Legetisch 16 genau definiert und dann bestimmt werden. Die Steuervorrichtung kann aus den jeweiligen Raumkoordinaten der Referenzmarken 21, 29 und 34 die entsprechenden Relativabstände berechnen.

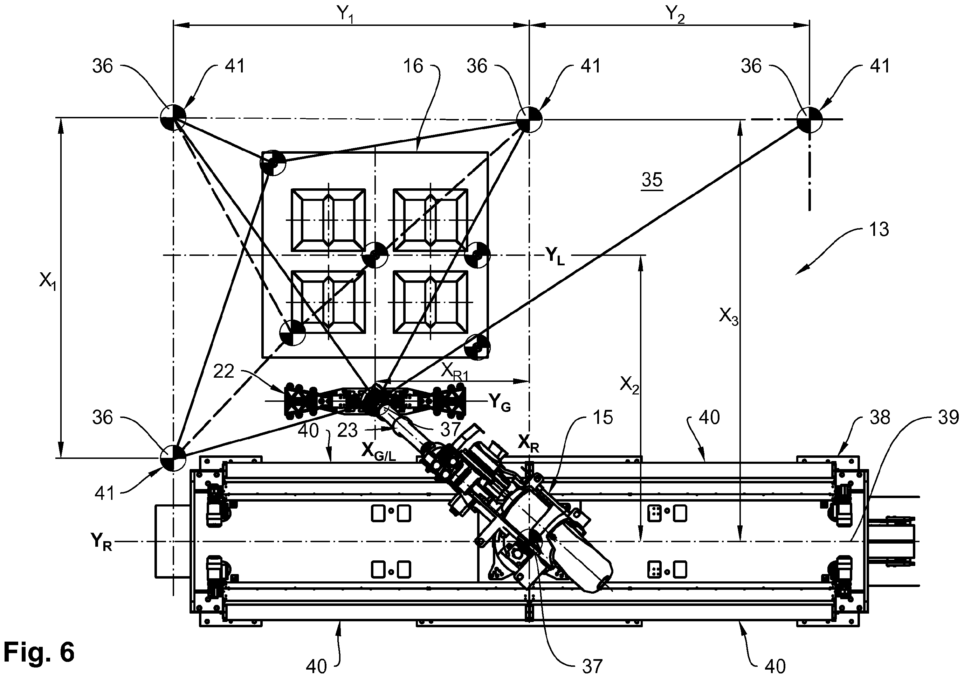

Wie aus der **Fig. 6** zu ersehen ist, sind in einem umgebenden Raum 35 weitere Referenzmarken 36 vorgesehen, die ihrerseits ein kartesisches Koordinatensystem ausbilden. Darüber hinaus sind dem Roboter 15 ebenfalls Referenzmarken 37 zugeordnet, so dass auch hier ein kartesisches Koordinatensystem ausgebildet ist, welches in Bezug zu den übrigen Koordinatensystemen bzw. Referenzmarken 21, 29 und 34 gestellt und mittels der Steuervorrichtung berechnet werden kann. Insbesondere die Referenzmarken 36 können jeweils ein Positionssensor 41 sein, mit dem übrige Referenzmarken 21, 29, 34 und 37 innerhalb des umgebenden Raums 35 erfasst werden können. Der Roboter 15 ist hier auf einer Fördervorrichtung 38 in Richtung einer Längsachse 39 verschiebbar und kann mittels der Greifvorrichtung 22 von Übergabepositionen 40 der Fördervorrichtung 38 Bleche 17, 18 und 19 entnehmen und auf dem Legetisch 16 wie dargestellt stapeln. Dabei ist es möglich, um die Fördervorrichtung 27 herum eine Anzahl weiterer Legetische 16 anzuordnen, die mit dem Roboter 15 bestückt werden können.

Das Verfahren zum Stapeln von Transformatorkernen 14 erfolgt mit Bezug auf die **Fig. 2** bis **6** derart, dass zunächst mehrere Bleche 17, 18 und 19 an Übergabepositionen 40 mit der Greifvorrichtung 22 aufgenommen werden, wobei eine genaue Referentierung der Konturen 31, 32 bzw. 33 erfolgt. Zuvor wurden die auf dem Legetisch 16 abgelegten Bleche 17, 18 und 19 bzw. deren Konturen 31, 32 bzw. 33 vermessen und aus den ermittelten Positionen von der Steuervorrichtung die jeweils geeignete Ablageposition für die an der Übergabeposition 40 aufgenommenen Bleche 31, 32 bzw. 33 bestimmt. Danach legt der Roboter 50 eines der Bleche 17, 18 oder 19 auf dem Legetisch 16 bzw. einem Blech 17, 18 bzw. 19 ab und überprüft einen Kantenabstand der Bleche 17, 18 bzw. 19 sowie eine Höhe über dem Legetisch 16. Darauf erfolgt eine Ausgleichskorrektur für die nächste Ablageposition des darauffolgenden Blechs 17, 18 bzw. 19. Weiter kann ein Abgleich mit einer Schneidvorrichtung, die die Geometrie der Bleche 17, 18 und 19 bestimmt, erfolgen.

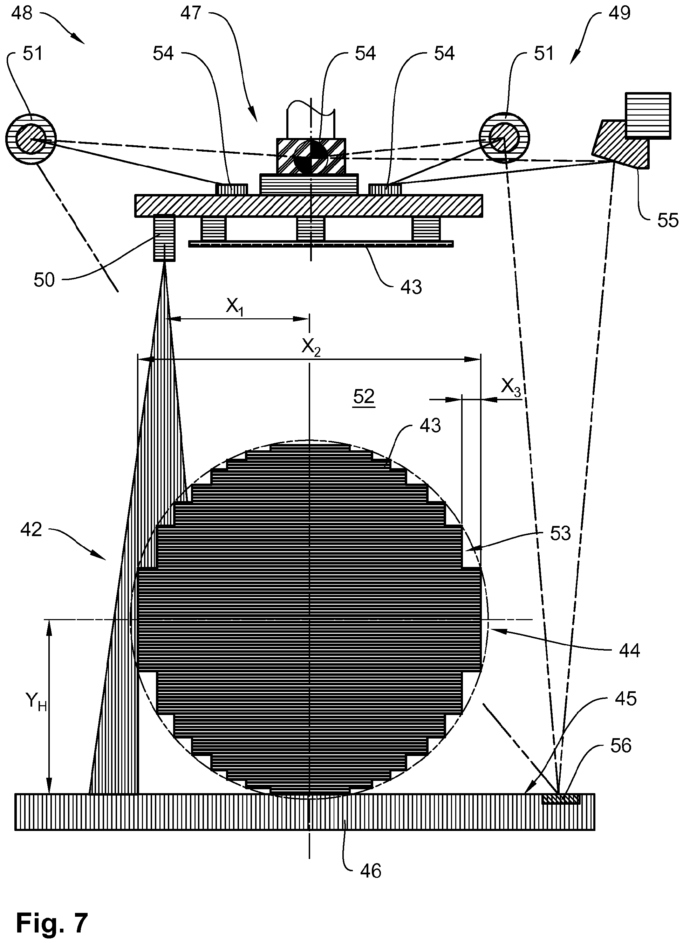

Die **Fig. 7** zeigt einen Querschnitt eines Transformatorkerns 42, wobei der Transformatorkern 42 aus unterschiedlich großen Blechen 43 in einem Stapel 44 ausgebildet wird. Eine Greifvorrichtung 47 eines hier nicht näher dargestellten Roboters ist oberhalb des Stapels 44 mit einem Blech 43 bewegbar. Die hier teilweise dargestellte Positioniervorrichtung 48 weist eine Messeinrichtung 49 auf, die einen an der Greifvorrichtung 47 angeordneten bildgebenden Sensor 50 umfasst. Weiter umfasst die Messeinrichtung Positionssensoren 51 in einem umgebenden Raum 52. Mit dem Sensor 50 ist eine Kontur 53 der Bleche 43 sowie eine Höhe der Bleche 43 über der Positionierfläche 45 messbar. Mit den Positionssensoren 51 sind Referenzmarken 54 der Greifvorrichtung 47, Referenzmarken 55 des umgebenden Raums 52 und Referenzmarken 56 des Legetischs 46 detektierbar. Eine hier nicht dargestellte Steuervorrichtung errechnet aus der jeweiligen Position der Referenzmarken 54, 55 und 56 deren Relativabstände bzw. Raumlage und bestimmt so eine Ablageposition des Blechs 43 auf dem Stapel 44.

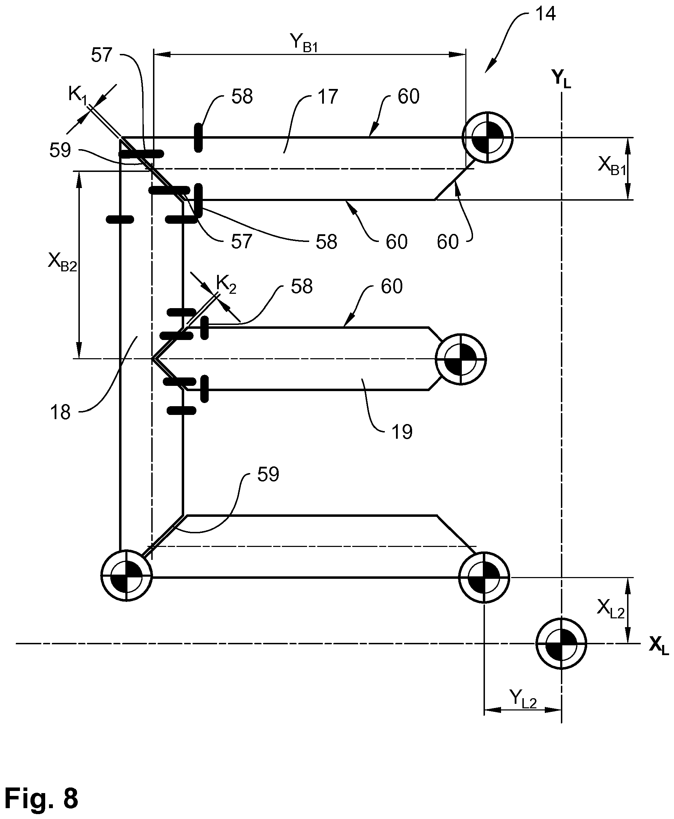

Die **Fig. 8** zeigt eine teilweise Darstellung des Transformatorkerns 14 aus der **Fig. 4****.** Mit einem hier nicht dargestellten, an der Greifvorrichtung angeordneten Sensor einer Messvorrichtung wird ein Kantenabstand K zwischen den Blechen 17, 18 und 19 vermessen. Die Messung erfolgt innerhalb von Zonen 57 mittels des Sensors im Bereich von Spalten 59 zwischen den Blechen 17, 18 und 19. Gleichzeitig ist es auch möglich, eine Lage von Kanten 60 der Bleche 17, 18 und 19 und damit eine Ablageposition näher zu bestimmen.

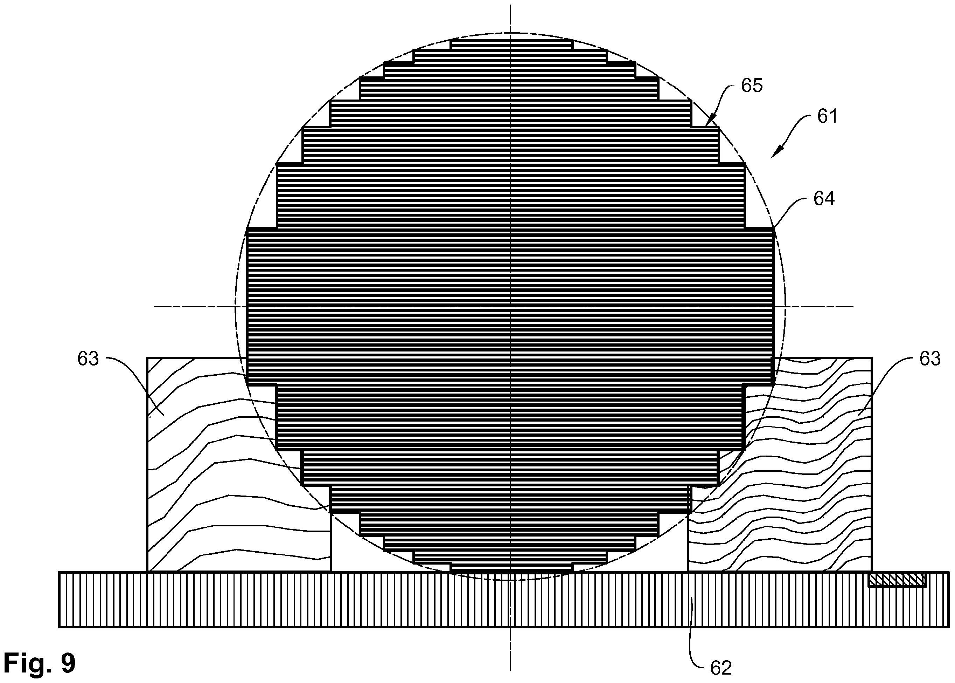

Die **Fig. 9** zeigt eine weitere Darstellung eines Transformatorkerns 61 in einer Schnittansicht auf einem Legetisch 62. Auf dem Legetisch 62 sind Stützvorrichtungen 63 angeordnet, auf denen die Bleche 64 abgelegt sind. Die Stützvorrichtungen 63 verhindern so eine unerwünschte Bewegung bzw. ein Umkippen des so gebildeten Stapels 65 aus den Blechen 64.

## Patentansprüche

1. Verfahren zur Herstellung von Transformatorkernen mit einem Positioniersystem (13), wobei Bleche (12, 17, 18, 19, 43, 64), aus denen ein Transformatorkern (14, 61) ausgebildet wird, mittels eines mehrachsigen Roboters (15) des Positioniersystems auf einem Legetisch (16, 46, 62) abgelegt werden, wobei das Positioniersystem von einer Steuervorrichtung gesteuert wird, wobei der Roboter von einer Steuereinrichtung der Steuervorrichtung gesteuert wird, wobei die Bleche von dem Roboter mit einem Greifarm (23) und einer Greifvorrichtung (22) des Greifarms gehandhabt werden, wobei mittels des Roboters Bleche von einer Übergabeposition (40) aufgenommen und auf den Legetisch zu einem Transformatorkern gestapelt werden, wobei die Bleche mittels einer Positioniervorrichtung (48) des Positioniersystems in jeweiligen Ablagepositionen auf dem Legetisch lagegenau positioniert werden,
**dadurch gekennzeichnet,**
**dass** mit einer Messeinrichtung (49) der Positioniervorrichtung eine Position eines auf dem Legetisch befindlichen ersten Blechs (12, 17, 18, 19, 43, 64) bestimmt wird, wobei mit der Steuervorrichtung eine Ablageposition eines zweiten Blechs (12, 17, 18, 19, 43, 64) in Abhängigkeit der Position des ersten Blechs bestimmt wird, wobei das zweite Blech mittels des Roboters in der Ablageposition positioniert wird.

2. Verfahren nach Anspruch 1,
**dadurch gekennzeichnet,**
**dass** die Steuervorrichtung die Ablageposition des zweiten Blechs (12, 17, 18, 19, 43, 64) in Abhängigkeit der Position des ersten Blechs (12, 17, 18, 19, 43, 64) anpasst.

3. Verfahren nach Anspruch 1 oder 2,
**dadurch gekennzeichnet,**
**dass** mittels der Messeinrichtung (49) eine Kante (60) einer Kontur (31, 32, 33, 53)des auf dem Legetisch befindlichen ersten Blechs (12, 17, 18, 19, 43, 64) relativ zu einem Referenzpunkt der Positioniervorrichtung (48) in einem Koordinatensystem der Messeinrichtung bestimmt wird.

4. Verfahren nach einem der vorangehenden Ansprüche,
**dadurch gekennzeichnet,**
**dass** mittels der Messeinrichtung (49) jeweils zumindest zwei, vorzugsweise drei Referenzmarken (21, 29, 34, 36, 37, 54, 55, 56) der Positioniervorrichtung (48) an dem Legetisch (16, 46, 62), dem Roboter (15), der Greifvorrichtung (22), der Bleche (12, 17, 18, 19, 43, 64) und/oder eines umgebenden Raums (35, 52) und deren Position in einem Koordinatensystem der Messeinrichtung erfasst werden.

5. Verfahren nach Anspruch 4,
**dadurch gekennzeichnet,**
**dass** die Referenzmarken (21, 29, 34, 36, 37, 54, 55, 56) jeweils ein Teilkoordinatensystem des Legetisches (16, 46, 62), des Roboters (15), der Greifvorrichtung (22), der Bleche (12, 17, 18, 19, 43, 64) und/oder des umgebenden Raums (35, 52) ausbilden, wobei die Steuervorrichtung mittels Koordinatentransformation die jeweiligen Positionen der Referenzmarken in den Teilkoordinatensystemen in das Koordinatensystem überführt.

6. Verfahren nach Anspruch 4 oder 5,
**dadurch gekennzeichnet,**
**dass** die Referenzmarken (21, 29, 34, 36, 37, 54, 55, 56) an dem Legetisch (16, 46, 62), dem Roboter (15), der Greifvorrichtung (22), der Bleche (12, 17, 18, 19, 43, 64) und/oder dem umgebenden Raum (35, 52) angeordnet sind, wobei die Erfassung der Referenzmarken mit mechanischen, optischen, magnetischen und/oder elektromagnetischen Mitteln der Messeinrichtung (49) erfolgt.

7. Verfahren nach einem der Ansprüche 4 bis 6,
**dadurch gekennzeichnet,**
**dass** die Steuervorrichtung die Referenzmarken (21, 29, 34, 36, 37, 54, 55, 56) verarbeitet und Relativabstände der Referenzmarken bestimmt, wobei die Steuervorrichtung die Ablageposition anhand der Relativabstände bestimmt.

8. Verfahren nach einem der vorangehenden Ansprüche,
**dadurch gekennzeichnet,**
**dass** die Steuervorrichtung eine Ist-Position des zweiten Blechs (12, 17, 18, 19, 43, 64) bestimmt und mit der Ablageposition vergleicht.

9. Verfahren nach Anspruch 8,
**dadurch gekennzeichnet,**
**dass** bei einer Bewegung des zweiten Blechs (12, 17, 18, 19, 43, 64) zu der Ablageposition durch den Roboter (15) die Steuervorrichtung eine Relativgeschwindigkeit des zweiten Blechs bestimmt und bei der Berechnung der Ist-Position des zweiten Blechs berücksichtigt.

10. Verfahren nach Anspruch 8 oder 9,
**dadurch gekennzeichnet,**
**dass** bei einer Bewegung des zweiten Blechs (12, 17, 18, 19, 43, 64) zu der Ablageposition durch den Roboter (15) die Steuervorrichtung eine Bewegungsbahn des zweiten Blechs anhand der Ist-Position des zweiten Blechs kontinuierlich oder in regelmäßigen Schritten korrigiert.

11. Verfahren nach einem der vorangehenden Ansprüche,
**dadurch gekennzeichnet,**
**dass** die Messeinrichtung (49) vor einem Aufnehmen des zweiten Blechs (12, 17, 18, 19, 43, 64) von der Übergabeposition (40) eine Kontur (31, 32, 33, 53) des zweiten Blechs erfasst und das Blech vermisst, wobei die Steuervorrichtung ein Messergebnis der Messung bei der Berechnung der Ablageposition des zweiten Blechs berücksichtigt.

12. Verfahren nach einem der vorangehenden Ansprüche,
**dadurch gekennzeichnet,**
**dass** die Messeinrichtung (49) nach einem Ablegen und Abgeben des zweiten Blechs (12, 17, 18, 19, 43, 64) einen Kantenabstand (K) einer Kante (60) des zweiten Blechs und einer Kante des ersten Blechs (12, 17, 18, 19, 43, 64) vermisst, wobei die Steuervorrichtung ein Messergebnis der Messung bei der Berechnung einer Ablageposition eines weiteren Blechs (12, 17, 18, 19, 43, 64) berücksichtigt.

13. Verfahren nach einem der vorangehenden Ansprüche,
**dadurch gekennzeichnet,**
**dass** die Messeinrichtung (49) eine Höhe (Y_{H}) der Ablageposition vermisst, wobei die Steuervorrichtung ein Messergebnis der Messung mit Bauteildaten eines Transformatorkerns (14, 61) vergleicht und beim Stapeln weiterer Bleche (12, 17, 18, 19, 43, 64) berücksichtigt.

14. Verfahren nach einem der vorangehenden Ansprüche,
**dadurch gekennzeichnet,**
**dass** von einem Steuersystem einer Anlage zur Herstellung von Transformatorkernen in Abhängigkeit von einen Transformatorkern (14, 61) beschreibenden Bauteildaten Steuerbefehle an die Steuervorrichtung übermittelt werden.

15. Positioniersystem (13) zur Herstellung von Transformatorkernen, wobei das Positioniersystem einen mehrachsigen Roboter (15), zumindest einen Legetisch (16, 46, 62) zur Aufnahme von Blechen (12, 17, 18, 19, 43, 64), aus denen ein Transformatorkern (14, 61) ausbildbar ist, und eine Steuervorrichtung zur Steuerung des Positioniersystems umfasst, wobei die Steuervorrichtung eine Steuereinrichtung zur Steuerung des Roboters aufweist, wobei der Roboter einen Greifarm (23) mit einer Greifvorrichtung (22) zur Handhabung von Blechen aufweist, wobei mittels des Roboters Bleche von einer Übergabeposition (40) aufnehmbar und auf den Legetisch zu einem Transformatorkern stapelbar sind, wobei das Positioniersystem eine Positioniervorrichtung (48) zur lagegenauen Positionierung der Bleche in jeweiligen Ablagepositionen auf dem Legetisch aufweist,
**dadurch gekennzeichnet,**
**dass** die Positioniervorrichtung eine Messeinrichtung (49) aufweist, mit der eine Position eines auf dem Legetisch befindlichen ersten Blechs (12, 17, 18, 19, 43, 64) bestimmbar ist, wobei mit der Steuervorrichtung eine Ablageposition eines zweiten Blechs (12, 17, 18, 19, 43, 64) in Abhängigkeit der Position des ersten Blechs bestimmbar ist, wobei das zweite Blech mittels des Roboters in der Ablageposition positionierbar ist.

16. Positioniersystem nach Anspruch 15,
**dadurch gekennzeichnet,**
**dass** die Messeinrichtung (49) zumindest einen an der Greifvorrichtung (22) angeordneten bildgebenden Sensor (50) umfasst, wobei mit dem Sensor zumindest eine Kante (60) einer Kontur (31, 32, 33, 53) des auf dem Legetisch befindlichen ersten Blechs (12, 17, 18, 19, 43, 64) erfassbar ist, und von der Messeinrichtung eine Lage der Kante in einem Koordinatensystem der Messeinrichtung bestimmbar ist.

17. Positioniersystem nach Anspruch 15 oder 16,
**dadurch gekennzeichnet,**
**dass** die Messeinrichtung (49) zumindest einen Positionssensor (51) umfasst, wobei mit dem Positionssensor Referenzmarken (21, 29, 34, 36, 37, 54, 55, 56) der Positioniervorrichtung (48) an dem Legetisch (16, 46, 62), dem Roboter (15), der Greifvorrichtung (22), der Bleche (12, 17, 18, 19, 43, 64) und/oder eines umgebenden Raums (35, 52) und deren Position in einem Koordinatensystem der Messeinrichtung erfassbar sind.

18. Positioniersystem nach Anspruch einem der Ansprüche 15 bis 17,
**dadurch gekennzeichnet,**
**dass** der Legetisch (16, 46, 62) frei von Fädelbolzen oder Anschlägen für die Bleche (12, 17, 18, 19, 43, 64) ist.

19. Positioniersystem nach Anspruch einem der Ansprüche 15 bis 18,
**dadurch gekennzeichnet,**
**dass** das Positioniersystem (13) eine Fördervorrichtung (38) zur Zuführung von Blechen (12, 17, 18, 19, 43, 64) umfasst, wobei die Fördervorrichtung benachbart dem Roboter (15) zumindest die Übergabeposition (40) für Bleche aufweist, wobei der Übergabeposition Bleche zuführbar und an der Übergabeposition stapelbar sind.

20. Positioniersystem nach Anspruch einem der Ansprüche 15 bis 19,
**dadurch gekennzeichnet,**
**dass** der Legetisch (16, 46, 62) selbstfahrend oder ortsfest ausgebildet ist.

21. Positioniersystem nach Anspruch einem der Ansprüche 15 bis 20,
**dadurch gekennzeichnet,**
**dass** die Greifvorrichtung (22) eine Klemmeinrichtung, eine Saugeinrichtung (28) und/oder eine Magneteinrichtung zur Aufnahme zumindest des zweiten Blechs (12, 17, 18, 19, 43, 64) mit der Greifvorrichtung aufweist, wobei die Greifvorrichtung eine Fixiereinrichtung zur Fixierung des zweiten Blechs an dem ersten Blech (12, 17, 18, 19, 43, 64) nach der Positionierung aufweist.

22. Positioniersystem nach Anspruch 21,
**dadurch gekennzeichnet,**
**dass** die Fixiereinrichtung einen Niederhalter aufweist, wobei mit dem Niederhalter das zweite Blech (12, 17, 18, 19, 43, 64) an das erste Blech (12, 17, 18, 19, 43, 64) andrückbar ist, während eine Abgabe des zweite Blechs erfolgt.

23. Positioniersystem nach Anspruch 21 oder 22 ,
**dadurch gekennzeichnet,**
**dass** die Fixiereinrichtung ein Dosiersystem für Klebermaterial aufweist, wobei mit dem Dosiersystem zumindest ein Klebermaterialtropfen an eine jeweilige Kante (60), Fläche oder Teilkontur einer Kontur (31, 32, 33, 53) des ersten Blechs (12, 17, 18, 19, 43, 64) und des darauf befindlichen zweiten Blechs (12, 17, 18, 19, 43, 64) applizierbar ist, bevor eine Abgabe des Blechs erfolgt.

24. Positioniersystem nach einem der Ansprüche 15 bis 23,
**dadurch gekennzeichnet,**
**dass** das Positioniersystem (13) zumindest eine Stützvorrichtung (63) zum Abstützen von auf dem Legetisch (16, 46, 62) gestapelten Blechen (12, 17, 18, 19, 43, 64) umfasst, wobei die Stützvorrichtung auf dem Legetisch anordbar ist.

## Claims

1. A method for producing transformer cores by means of a positioning system (13), sheets (12, 17, 18, 19, 43, 64) of which a transformer core (14, 61) is constructed being stacked on a stacking table (16, 46, 62) by means of a multiaxial robot (15) of the positioning system, said positioning system being controlled by a control device, said robot being controlled by a control apparatus of the control device, said sheets being handled by the robot using a grappling arm (23) and a grappling device (22) of the grappling arm, sheets being collected from a transfer position (40) and being stacked on the stacking table at a transformer core by means of the robot, said sheets being precisely positioned in respective stacking positions on the stacking table by means of a positioning apparatus (48),
**characterized in that**
a position of a first sheet (12, 17, 18, 19, 43, 64) on the stacking table is determined using a measuring device (49) of the positioning apparatus, a stacking position of a second sheet (12, 17, 18, 19, 43, 64) being determined as a function of the position of the first sheet using the control apparatus, said second sheet being positioned in the stacking position by means of the robot.

2. The method according to claim 1,
**characterized in that**
the control apparatus adjusts the stacking position of the second sheet (12, 17, 18, 19, 43, 64) as a function of the position of the first sheet (12, 17, 18, 19, 43, 64).

3. The method according to claim 1 or 2,
**characterized in that**
an edge (60) of a contour (31, 32, 33, 53) of the first sheet (12, 17, 18, 19, 43, 64) on the stacking table is determined in a co-ordinate system of the measuring device relative to a reference point of the positioning apparatus (48) by means of the measuring device (49).

4. The method according to any one of the preceding claims,
**characterized in that**
at least two, preferably three, reference marks (21, 29, 34, 36, 37, 54, 55, 56) of the positioning apparatus (48) are each detected on the stacking table (16, 46, 62), the robot (15), the grappling device (22), the sheets (12, 17, 18, 19, 43, 64) and/or reference marks of a surrounding space (35, 52) and their positions are detected in a co-ordinate system of the measuring device by means of the measuring device (49).

5. The method according to claim 4,
**characterized in that**
the reference marks (21, 29, 34, 36, 37, 54, 55, 56) each form a partial co-ordinate system of the stacking table (16, 46, 62), the robot (15), the grappling device (22), the sheets (12, 17, 18, 19, 43, 64) and/or the surrounding space (35, 52), the control apparatus transferring the respective positions of the reference marks in the partial co-ordinate system to the co-ordinate system by means of co-ordinate transformation.

6. The method according to claim 4 or 5,
**characterized in that**
the reference marks (21, 29, 34, 36, 37, 54, 55, 56) are disposed on the stacking table (16, 46, 62), the robot (15), grappling device (22), the sheets (12, 17, 18, 19, 43, 64) and/or the surrounding space (35, 52), said reference marks being detected using mechanical, optical, magnetic and/or electromagnetic means of the measuring device (49).

7. The method according to one of the claims 4 to 6,
**characterized in that**
the control apparatus processes the reference marks (21, 29, 34, 36, 37, 54, 55, 56) and determines relative distances of the reference marks, said control apparatus determining the stacking position using the relative distances.

8. The method according to any one of the preceding claims,
**characterized in that**
the control apparatus determines a current position of the second sheet (12, 17, 18, 19, 43, 64) and compares it to the stacking position.

9. The method according to claim 8,
**characterized in that**
the control apparatus determines a relative speed of the second sheet (12, 17, 18, 19, 43, 64) when the second sheet is moved to the stacking position by the robot (15) and takes the relative speed of the second sheet into consideration when calculating the current position of the second sheet.

10. The method according to claim 8 or 9,
**characterized in that**
the control apparatus corrects a trajectory of the second sheet (12, 17, 18, 19, 43, 64) either continuously or in regular intervals using the current position of the second sheet when the second sheet is moved to the stacking position by the robot (15).

11. The method according to any one of the preceding claims,
**characterized in that**
before collecting the second sheet (12, 17, 18, 19, 43, 64) from the transfer position (40), the measuring device (49) detects a contour (31, 32, 33, 53) of the second sheet and measures the sheet, the control apparatus taking a measuring result of the measurement into consideration when calculating the stacking position of the second sheet.

12. The method according to any one of the preceding claims,
**characterized in that**
after stacking and yielding the second sheet (12, 17, 18, 19, 43, 64), the measuring device (49) measures an edge distance (K) of an edge (60) of the second sheet and an edge of the first sheet (12, 17, 18, 19, 43, 64), the control apparatus taking a measuring result of the measurement into consideration when calculating a stacking position of a further sheet (12, 17, 18, 19, 43, 64).

13. The method according to any one of the preceding claims,
**characterized in that**
the measuring device (49) measures a height (Y_{H}) of the stacking position, the control apparatus comparing a measuring result of the measurement to component data of a transformer core (14, 61) and taking said measuring result into consideration when stacking further sheets (12, 17, 18, 19, 43, 64).

14. The method according to any one of the preceding claims,
**characterized in that**
control commands are transmitted to the control apparatus by a control system of a machine for producing transformer cores as a function of component data describing a transformer core (14, 61).

15. A positioning system (13) for producing transformer cores, said positioning system comprising a multiaxial robot (15), at least one stacking table (16, 46, 62) for collecting sheets (12, 17, 18, 19, 43, 64) of which a transformer core (14, 61) is constructed and a control apparatus for controlling the positioning system, said control apparatus comprising a control device for controlling the robot, said robot comprising a grappling arm (23) having a grappling device (22) for handling sheets, sheets being collected from a transfer position (40) and being stacked on the stacking table to form a transformer core by means of the robot, said positioning system comprising a positioning apparatus (48) for precisely positioning the sheets on the stacking table in respective stacking positions,
**characterized in that**
the positioning apparatus comprises a measuring device (49) by means of which a position of a first sheet (12, 17, 18, 19, 43, 64) on the stacking table is determined, a stacking position of a second sheet (12, 17, 18, 19, 43, 64) being determined as a function of the position of the first sheet using the control apparatus, said second sheet being positioned in the stacking position by means of the robot.

16. The positioning system according to claim 15,
**characterized in that**
the measuring device (49) has at least one imaging sensor (50) disposed on the grappling device (22), at least one edge (60) of a contour (31, 32, 33, 53) of the first sheet (12, 17, 18, 19, 43, 64) on the stacking table being detected using the sensor, and a position of the edge being determined in a co-ordinate system of the measuring device using the measuring device

17. The positioning system according to claim 15 or 16,
**characterized in that**
the measuring device (49) has at least one positioning sensor (51), said positioning apparatus detecting reference marks (21, 29, 34, 36, 37, 54, 55, 56) of the positioning apparatus (48) at the stacking table (16, 46, 62), the robot (15), the grappling device (22), the sheets (12, 17, 18, 19, 43, 64) and/or reference marks (21, 29, 34, 36, 37, 54, 55, 56) of a surrounding space (35, 52) and their positions in a co-ordinate system of the measuring device.

18. The positioning system according to any one of the claims 15 to 17,
**characterized in that**
the stacking table (16, 46, 62) is free of threading bolts or abutments for the sheets (12, 17, 18, 19, 43, 64).

19. The positioning system according to any one of the claims 15 to 18,
**characterized in that**
the positioning system (13) has a conveying apparatus (38) for conveying sheets (12, 17, 18, 19, 43, 64), said conveying apparatus having at least the transfer position (40) for sheets adjacent to the robot (15), sheets being conveyed to the transfer position and being stacked at the transfer position.

20. The positioning system according to any one of the claims 15 to 19,
**characterized in that**
the stacking table (16, 46, 62) is self-propelled or stationary.

21. The positioning system according to any one of the claims 15 to 20,
**characterized in that**
the grappling device (22) comprises a clamping device, a suction device (28) and/or a magnetic device for collecting at least the second sheet (12, 17, 18, 19, 43, 64) using the grappling apparatus, said grappling apparatus comprising a fixating device for fixing the second sheet to the first sheet (12, 17, 18, 19, 43, 64) after being positioned.

22. The positioning system according to claim 21,
**characterized in that**
the fixating device comprises a pressure pad, the second sheet (12, 17, 18, 19, 43, 64) being pressed to the first sheet (12, 17, 18, 19, 43, 64) by means of the pressure pad while the second sheet is yielded.

23. The positioning system according to claim 21 or 22,
**characterized in that**
the fixating device comprises a dosing system for adhesive material, at least a drop of adhesive material being applied to a respective edge (60), surface or partial contour of a contour (31, 32, 33, 53) of the first sheet (12, 17, 18, 19, 43, 64) and of the second sheet (12, 17, 18, 19, 43, 64) disposed thereon by means of the dosing system before the sheet is yielded.

24. The positioning system according to any one of the claims 15 to 23,
**characterized in that**
the positioning system (13) comprises at least one support apparatus (63) for supporting sheets (12, 17, 18, 19, 43, 64) stacked on the stacking table (16, 46, 62), said support apparatus being disposed on the stacking table.

## Revendications

1. Procédé pour produire des noyaux de transformateurs au moyen d'un système de positionnement (13), des tôles (12, 17, 18, 19, 43, 64) desquelles un noyau de transformateur (14, 61) est construit étant empilées sur une table d'empilage (16, 46, 62) au moyen d'un robot (15) multiaxial du système de positionnement, ledit système de positionnement étant contrôlé par un dispositif de contrôle, le robot étant contrôlé par un appareil de contrôle du dispositif de contrôle, les tôles étant maniées par le robot en utilisant un bras de préhension (23) et un dispositif de préhension (22) du bras de préhension, des tôles étant recueillies à partir d'une position de transfère (40) et étant empilées sur la table d'empilage afin de former un noyau de transformateur au moyen du robot, les tôles étant positionnées exactement dans des positions d'empilage respectives sur la table d'empilage au moyen d'un appareil de positionnement (48),
**caractérisé en ce**
**qu'**une position d'une première tôle (12, 17, 18, 19, 43, 64) située sur la table d'empilage est déterminée en utilisant un dispositif de mesure (49) de l'appareil de positionnement, une position d'empilage d'une deuxième tôle (12, 17, 18, 19, 43, 64) étant déterminée en fonction de la position de la première tôle en utilisant l'appareil de contrôle, la deuxième tôle étant positionnée dans la position d'empilage au moyen du robot.

2. Procédé selon la revendication 1,
**caractérisé en ce que**
l'appareil de contrôle ajuste la position d'empilage de la deuxième tôle (12, 17, 18, 19, 43, 64) en fonction de la position de la première tôle (12, 17, 18, 19, 43, 64).

3. Procédé selon la revendication 1 ou 2,
**caractérisé en ce**
**qu'**un bord (60) d'un contour (31, 32, 33, 53) de la première tôle (12, 17, 18, 19, 43, 64) située sur la table d'empilage est déterminé dans un système de coordonnées du dispositif de mesure par rapport à un point de référence de l'appareil de positionnement (48) au moyen du dispositif de mesure (49).

4. Procédé selon l'une quelconque des revendications précédentes,
**caractérisé en ce**
**qu'**au moins deux, de préférence trois, marques de référence (21, 29, 34, 36, 37, 54, 55, 56) de l'appareil de positionnement (48) sont chacun détectés sur la table d'empilage (16, 46, 62), sur le robot (15), sur le dispositif de préhension (22), sur les tôles (12, 17, 18, 19, 43, 64) et/ou des marques de référence d'un espace environnant (35, 52) et leurs positions sont détectés dans un système de coordonnées du dispositif de mesure au moyen du dispositif de mesure (49).

5. Procédé selon la revendication 4,
**caractérisé en ce que**
les marques de référence (21, 29, 34, 36, 37, 54, 55, 56) chacun forment un système de coordonnées partiel de la table d'empilage (16, 46, 62), du robot (15), du dispositif de préhension (22), des tôles (12, 17, 18, 19, 43, 64) et/ou de l'espace environnant (35, 52), l'appareil de contrôle transférant les positions respectives des marques de référence dans le système de coordonnées partiel au système de coordonnées au moyen de la transformation de coordonnées.

6. Procédé selon la revendication 4 ou 5,
**caractérisé en ce que**
les marques de référence (21, 29, 34, 36, 37, 54, 55, 56) sont disposées sur la table d'empilage (16, 46, 62), sur le robot (15), sur le dispositif de préhension (22), sur les tôles (12, 17, 18, 19, 43, 64) et/ou dans l'espace environnant (35, 52), les marques de référence étant détectées en utilisant des moyens mécaniques, optiques, magnétiques et/ou électromagnétiques du dispositif de mesure (49).

7. Procédé selon l'une quelconque des revendications 4 à 6,
**caractérisé en ce que**
l'appareil de contrôle traite les marques de référence (21, 29, 34, 36, 37, 54, 55, 56) et détermine des distances relatives des marques de référence, l'appareil de contrôle déterminant la position d'empilage en utilisant les distances relatives.

8. Procédé selon l'une quelconque des revendications précédentes,
**caractérisé en ce que**
l'appareil de contrôle détermine une position actuelle de la deuxième tôle (12, 17, 18, 19, 43, 64) et la compare à la position d'empilage.

9. Procédé selon la revendication 8,
**caractérisé en ce que**
l'appareil de contrôle détermine une vitesse relative de la deuxième tôle (12, 17, 18, 19, 43, 64) quand la deuxième tôle est bougée à la position d'empilage par le robot (15) et considère la vitesse relative de la deuxième tôle quand il calcule la position actuelle de la deuxième tôle.

10. Procédé selon la revendication 8 ou 9,
**caractérisé en ce que**
l'appareil de contrôle corrige une trajectoire de la deuxième tôle (12, 17, 18, 19, 43, 64) soit continuellement soit en intervalle régulier en utilisant la position actuelle de la deuxième tôle quand la deuxième tôle est bougée à la position d'empilage par le robot (15).

11. Procédé selon l'une quelconque des revendications précédentes,
**caractérisé en ce**
**qu'**avant la deuxième tôle (12, 17, 18, 19, 43, 64) est recueillie à partir de la position de transfère (40), le dispositif de mesure (49) détecte un contour (31, 32, 33, 53) de la deuxième tôle et mesure la tôle, l'appareil de contrôle considérant un résultat de mesure quand il calcule la position d'empilage de la deuxième tôle.

12. Procédé selon l'une quelconque des revendications précédentes,
**caractérisé en ce**
**qu'**après la deuxième tôle (12, 17, 18, 19, 43, 64) est empilée et est transmise, le dispositif de mesure (49) mesure une distance de bord (K) d'un bord (60) de la deuxième tôle et un bord de la première tôle (12, 17, 18, 19, 43, 64), l'appareil de contrôle considérant un résultat de mesure quand il calcule une position d'empilage d'une outre tôle (12, 17, 18, 19, 43, 64).

13. Procédé selon l'une quelconque des revendications précédentes,
**caractérisé en ce que**
le dispositif de mesure (49) mesure une hauteur (Y_{H}) de la position d'empilage, l'appareil de contrôle comparant un résultat de mesure aux données de composants d'un noyau de transformateur (14, 61) et considérant le résultat de mesure quand des outres tôles (12, 17, 18, 19, 43, 64) sont empilées.

14. Procédé selon l'une quelconque des revendications précédentes,
**caractérisé en ce que**
des instructions de contrôle sont transmises à l'appareil de contrôle par un système de contrôle d'une machine pour la production des noyaux de transformateurs en fonction des données de composants décrivant un noyau de transformateur (14, 61).

15. Système de positionnement (13) pour produire des noyaux de transformateurs, le système de positionnement comprenant un robot (15) multiaxial, au moins une table d'empilage (16, 46, 62) pour recueillir des tôles (12, 17, 18, 19, 43, 64) desquelles un noyau de transformateur (14, 61) est construit et un appareil de contrôle pour contrôler le système de positionnement, l'appareil de contrôle comprenant un dispositif de contrôle pour contrôler le robot, le robot comprenant un bras de préhension (23) ayant un dispositif de préhension (22) pour manier des tôles, des tôles étant recueillies à partir d'une position de transfère (40) et étant empilées sur la table d'empilage afin de former un noyau de transformateur au moyen du robot, le système de positionnement comprenant un appareil de positionnement (48) pour positionner exactement les tôles sur la table d'empilage dans des positions d'empilage respectives,
**caractérisé en ce que**
l'appareil de positionnement comprend un dispositif de mesure (49) au moyen duquel une position d'une première tôle (12, 17, 18, 19, 43, 64) située sur la table d'empilage est déterminée, une position d'empilage d'une deuxième tôle (12, 17, 18, 19, 43, 64) étant déterminée en fonction de la position de la première tôle en utilisant l'appareil de contrôle, la deuxième tôle étant positionnée dans la position d'empilage au moyen du robot.

16. Système de positionnement selon la revendication 15,
**caractérisé en ce que**
le dispositif de mesure (49) a au moins un capteur d'imagerie (50) disposé sur le dispositif de préhension (22), au moins un bord (60) d'un contour (31, 32, 33, 53) de la première tôle (12, 17, 18, 19, 43, 64) située sur la table d'empilage étant détecté en utilisant le capteur, et une position du bord étant déterminée dans un système de coordonnées du dispositif de mesure en utilisant le dispositif de mesure.

17. Système de positionnement selon la revendication 15 ou 16,
**caractérisé en ce que**
le dispositif de mesure (49) a au moins un capteur de positionnement (51), l'appareil de positionnement détectant des marques de référence (21, 29, 34, 36, 37, 54, 55, 56) de l'appareil de positionnement (48) sur la table d'empilage (16, 46, 62), sur le robot (15), sur le dispositif de préhension (22), sur les tôles (12, 17, 18, 19, 43, 64) et/ou des marques de référence d'un espace environnant (35, 52) et leurs positions dans un système de coordonnées du dispositif de mesure.

18. Système de positionnement selon l'une quelconque des revendications 15 à 17,
**caractérisé en ce que**
la table d'empilage (16, 46, 62) n'a pas de boulons de filetage ou d'appuis pour les tôles (12, 17, 18, 19, 43, 64).

19. Système de positionnement selon l'une quelconque des revendications 15 à 18,
**caractérisé en ce que**
le système de positionnement (13) a un appareil de convoyeur (38) pour convoyer des tôles (12, 17, 18, 19, 43, 64), l'appareil de convoyeur ayant au moins la position de transfère (40) pour des tôles adjacente au robot (15), des tôles étant convoyées à la position de transfère et étant empilées à la position de transfère.

20. Système de positionnement selon l'une quelconque des revendications 15 à 19,
**caractérisé en ce que**
la table d'empilage (16, 46, 62) est une table automotrice ou fixe.

21. Système de positionnement selon l'une quelconque des revendications 15 à 20,
**caractérisé en ce que**
le dispositif de préhension (22) comprend un dispositif de serrage, un dispositif de succion (28) et/ou un dispositif magnétique pour recueillir au moins la deuxième tôle (12, 17, 18, 19, 43, 64) en utilisant le dispositif de préhension, le dispositif de préhension comprenant un dispositif de fixage pour fixer la deuxième tôle à la première tôle (12, 17, 18, 19, 43, 64) après qu'elle a été positionnée.

22. Système de positionnement selon la revendication 21,
**caractérisé en ce que**
le dispositif de fixage comprend un serre-flan, la deuxième tôle (12, 17, 18, 19, 43, 64) étant serrée contre la première tôle (12, 17, 18, 19, 43, 64) au moyen du serre-flan pendant la deuxième tôle est transmise.

23. Système de positionnement selon la revendication 21 ou 22,
**caractérisé en ce que**
le dispositif de fixage comprend un système de dosage pour un matériau adhésif, au moins une goutte du matériau adhésif étant appliquée au bord (60) respectif, à une surface respective ou à un contour partiel d'un contour (31, 32, 33, 53) respectif de la première tôle (12, 17, 18, 19, 43, 64) et de la deuxième tôle (12, 17, 18, 19, 43, 64) située sur la première tôle au moyen du système de dosage avant que la tôle soit transmise.

24. Système de positionnement selon l'une quelconque des revendications 15 à 23,
**caractérisé en ce que**
le système de positionnement (13) comprend au moins un appareil de support (63) pour supporter des tôles (12, 17, 18, 19, 43, 64) empilées sur la table d'empilage (16, 46, 62), l'appareil de support étant disposé sur la table d'empilage.
